(19) Europäisches Patentamt
European Patent Office
Office européen des brevets

(11) **EP 2 112 375 A2**

(12) **EUROPEAN PATENT APPLICATION**

(43) Date of publication:
**28.10.2009 Bulletin 2009/44**

(51) Int Cl.:
***F03D 11/00*** *(2006.01)*

(21) Application number: **09156771.9**

(22) Date of filing: **30.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.03.2008 GB 0805647
04.11.2008 GB 0820161**

(71) Applicant: **Insensys Limited
Fareham, Hampshire PO15 5SX (GB)**

(72) Inventors:
• **Volanthen, Mark
Fareham, Hampshire PO15 5SX (GB)**
• **Andrews, Clive Richard
Fareham, Hampshire PO15 5SX (GB)**

(74) Representative: **ip21 Ltd
Central Formalities Department
Norwich Research Park
Colney
Norwich
NR4 7UT (GB)**

(54) **Wind turbine icing detection**

(57)    A method of detecting the formation of ice on the blades of a wind turbine 1. The wind turbine has at least one turbine blade 2 mounted to a rotor and provided with at least a first strain sensor 4 for measuring mechanical strain of the turbine blade. The method comprises detecting changes in an output signal of the strain sensor 4 due to changes in the mass of the turbine blade 2 caused by the formation of ice on the turbine blade.

FIG. 1

EP 2 112 375 A2

**Description**

Field of the Invention

This invention relates to the monitoring of wind turbines.

Background to the Invention

Many advanced wind turbines continuously acquire and transmit performance measurement data to a remote location. A wide range of parameters are typically measured covering both input and output parameters associated with the turbine. Input parameters measured include wind conditions, yaw angle, blade pitch angle and many more parameters. These parameters provide information about the configuration of the turbine and the conditions in which it is operating. Output parameters often measured include generator power, rotor speed, lubricant temperatures, and vibrations and provide information about how the turbine and its key constituent components are performing at any moment in time. The input parameters can be viewed as the 'cause' and the output parameters as the 'effect'.

Measurement data is used for a variety of different purposes. Control systems within the turbine utilise input data to optimise the turbine configuration, for example adjusting the turbine yaw to track changes in the wind direction. Measurement data from turbine output parameters are used for performance monitoring, condition monitoring and fault protection. Performance monitoring provides an analysis of how a turbine is operating and enables comparison with expectation and with other turbines. Condition monitoring enables maintenance and intervention to be scheduled in a timely manner. Fault protection provides a fail safe mechanism to avoid or reduce turbine damage in the event of component failures or overloads.

In a typical condition monitoring system, data from numerous sensors and other instrumentation in the turbine are acquired by a central monitoring unit located in the nacelle of the turbine. The monitoring unit acquires data several times per second and performs signal processing on the measurements. Data can be statistically analysed, converted into the frequency domain for analysis, or combined with data from other sensors. Processed data is then sent on to a remote server. Since the bandwidth of the link between the monitoring unit and the server is limited, the monitoring unit summarises the measurement data prior to onward transmission.

The server stores threshold levels for key measurement parameters and can raise alarm and warning messages via email or SMS. The server transmits summary data received from the monitoring unit on to the control room, where data from other turbines is also collected. Following an alarm event, a short burst of data from the alarming sensor can also be sent to the control room. Software running in the remote control room enables data from all turbines connected to the system to be viewed and compared.

Blades for wind turbines are typically constructed of glass-reinforced plastics (GRP) on a sub-structure, which may be formed of wood, glass fibre, carbon fibre, foam or other materials. A typical wind turbine blade may have a length of between 20 and 60 metres or more. It is known, for example from US 4,297,076, to provides the blades of a wind turbine with strain gauges and to adjust the pitch of portions of the blades in response to the bending moment on the blades measured by the strain gauges. Manufacturers of wind turbines are now installing strain sensors in turbine blades for real time measurement of blade bending moments. The blade load information is used for both cyclic pitch control and condition monitoring. Information about a wind turbine's condition can be monitored remotely to ensure continued effective operation of the turbine.

Wind turbines may also include drive train monitoring systems which use accelerometers and displacement sensors on key components of the drive train to identify any degradation of the drive train components.

The formation of ice on a wind turbine is a significant problem, because it is often necessary to shut down operation of the turbine in order to prevent the ice being thrown off the turbine blades in a dangerous way. Thus, the accurate detection of ice formation on the turbine blades is important for safe turbine operation.

It would be desirable to maximise the available performance information that can be generated from the sensors installed in a wind turbine.

Summary of the Invention

Viewed from one aspect, the present invention provides a method of detecting the formation of ice on the blades of a wind turbine, the wind turbine having at least one turbine blade mounted to a rotor and provided with at least a first strain sensor for measuring mechanical strain of the turbine blade. The method comprises detecting changes in an output signal of the strain sensor (s) due to changes in the mass of the turbine blade caused by the formation of ice on the turbine blade.

Thus, according to this aspect of the invention, when ice is formed on the turbine blades, the strain sensor is capable of identifying the resultant change in bending moment of the turbine blade. This provides a relatively simple and effective method of detecting ice formation on the turbine blade. Furthermore, ice is commonly formed towards the tip of the rotor blade so that the change in bending moment due to ice formation is accentuated by the distance from the root of the blade.

In embodiments of the invention, the strain sensor is mounted to the turbine blade proximate the rotor. In this way, ice formation, particularly at the tip of the blade will provide the maximum strain output at the root of turbine blade.

The strain sensor may be configured to identify ice formation in a static turbine blade, for example when the turbine has been stopped for safety reasons. However, the method may also comprise processing the output signal of the first strain sensor to identify a periodic component of the output signal indicative of mechanical strain due to the effect of gravity on the turbine blade.

A significant problem in strain measurement is the identification of the output from an optical fibre strain sensor in an unstrained condition, because it is often impossible to identify when the sensor is unstrained.

Viewed from a further aspect, the present invention provides a method of calibrating an optical fibre strain sensor in a wind turbine, the wind turbine having at least one turbine blade mounted to a rotor and provided with at least a first strain sensor for measuring mechanical strain of the turbine blade. The method comprises rotating the wind turbine, processing an output signal of the first strain sensor to identify a periodic component of the output signal indicative of mechanical strain due to the effect of gravity on the turbine blade, and determining an output value for the unstrained first strain sensor by reference to the midpoint of the peak-to-peak amplitude of the output signal.

Thus according to this method, the rotation of the wind turbine can be used to build up a periodic output from the strain sensor due to the effect of gravity on the wind turbine. The "zero-crossing" point of the periodic output can be identified in the output signal and this represents the output of the unstrained sensor.

Viewed from a further aspect, the present invention provides a method of calibrating an optical fibre strain sensor in a wind turbine, the wind turbine having at least one turbine blade mounted to a rotor and provided with at least a first strain sensor for measuring mechanical strain of the turbine blade. The method comprises rotating the wind turbine, processing an output signal of the first strain sensor to identify a periodic component of the output signal indicative of mechanical strain due to the effect of gravity on the turbine blade, and determining a relationship between the output value of the first strain sensor and the bending moment due to the mass of the turbine blade by reference to the peak-to-peak amplitude of the output signal.

Thus according to this method, the rotation of the wind turbine can be used to build up a periodic output from the strain sensor due to the effect of gravity on the wind turbine. A calibration factor for the strain sensor can be identified in the output signal in this way.

Typically, the output signals from two strain sensors spaced in the direction orthogonal to the axis of the turbine blade are used to derive an output signal representative of the bending moment on the turbine blade from which a calibration value may be derived.

Viewed from a further aspect, the invention provides, a method of calibrating an optical fibre strain sensor in a wind turbine, the wind turbine having at least one turbine blade mounted to a rotor and provided with at least a first strain sensor for measuring mechanical strain of the turbine blade, the method comprising:

> rotating the wind turbine at less than 10 rpm, particularly less than 7 rpm;
> processing an output signal of the first strain sensor to identify a periodic component of the output signal indicative of mechanical strain due to the effect of gravity on the turbine blade;
> determining a calibration value by reference to the periodic component of the output signal.

This application also discloses a method of monitoring the performance of a wind turbine. The wind turbine has at least one turbine blade mounted to a rotor and is provided with at least a first strain sensor for measuring mechanical strain of the turbine blade. The method comprises:

> a) processing an output signal of the first strain sensor to identify a periodic component of the output signal indicative of mechanical strain due to the effect of gravity on the turbine blade;
> b) generating a signal representing at least the speed of rotation of the turbine blade about the axis of the rotor by reference to the identified periodic component of the output signal of the first strain sensor.

Thus, strain sensors that have been used typically for condition monitoring of wind turbines can be used to quantify the speed of rotation of the wind turbine by simple analysis of the strain sensor output signals.

The signal representing the speed of rotation of the turbine blade may be a simple speed indication, such as a value or a pulse. However, preferably the step of generating a signal representing the speed of rotation of the turbine blade about the axis of the rotor includes generating a signal representing the angular position of the turbine blade about axis of the rotor. Thus, the method extends to generating an indication of the angular position of the turbine blade, which in itself will indicate speed of rotation, because the angular position will change for a rotating turbine.

The signals generated may be relative indications of changes in rotation speed and/or other parameters of the wind turbine performance. However, it is preferred for the output signals to be calibrated into accurate physical parameters. In one arrangement the measured values from the strain sensors are processed to generate bending moments for the turbine blades. For example, the turbine blade may be provided with at least a second strain sensor. The first and second strain sensors may be arranged to measure strain in a first direction and may be spaced on the turbine blade in a direction substantially orthogonal to the first direction. The difference in mechanical strain measured by the first and second strain sensors may be representative of a bending moment on the turbine blade. Other arrangements of strain sensors may be used to generate bending moment information.

The step of processing the output signal of the first strain sensor may include generating a signal representing a bending moment on the turbine blade by reference the output signal from the second strain sensor. Thus, the rotational speed signal may be generated by reference to a sinusoidal signal indicative of a bending moment, rather than simply strain, due to gravity.

The turbine blade may be provided with at least a third strain sensor spaced from, and not collinear with, the first and second strain sensors. In this way, signals representing bending moments on the turbine blade in two orthogonal directions can be generated from the differences in the mechanical strain measured by the first, second and third strain sensors. In a typical arrangement, at least four strain sensors are provided. The four strain sensors may be arranged in two collinear pairs along respective, substantially orthogonal axes.

The method may comprise determining the angle of inclination of the turbine blade about an axis extending radially from the rotor by comparison of the components of the bending moments in the two orthogonal directions.

This application also discloses a method of monitoring the performance of a wind turbine, the wind turbine having at least one turbine blade mounted to a rotor and provided with at least a first strain sensor and a second strain sensor for measuring mechanical strain of the turbine blade, wherein the first strain sensor and the second strain sensor are arranged on the turbine blade to provide output signals representative of mechanical strain on the turbine blade in two non-parallel directions, the method comprising:

> processing the output signals of the first strain sensor and the second strain sensor to identify a periodic component of the output signals indicative of strain in each of the two non-parallel directions due to the effect of gravity on the turbine blade;
> generating a signal representing the angle of inclination of the turbine blade about an axis extending radially from the rotor by comparison of the components of the mechanical strain in the two non-parallel directions.

Thus, strain sensors that have been used typically for condition monitoring of wind turbines can be used to quantify the pitch of the wind turbine blades by simple analysis of the strain sensor output signals.

The comparison of the components of the moments in the two non-parallel directions may comprise calculating a ratio of the components.

This application also discloses a method of monitoring the performance of a wind turbine, the wind turbine having at least one turbine blade mounted to a rotor and provided with at least a first strain sensor and a second strain sensor for measuring mechanical strain of the turbine blade, wherein the first strain sensor and the second strain sensor are arranged on the turbine blade to provide output signals representative of bending moments on the turbine blade in two non-parallel directions, the method comprising:

> processing the output signals of the first strain sensor and the second strain sensor to generate signals indicative of bending moments on the turbine blade in each of the two non-parallel directions;
> generating a signal from the bending moment signals indicative of the torque about the axis of the rotor of the wind turbine.

Accordingly, the drive torque about the axis of the rotor can be measured directly. This has the very significant advantage that the input power to the turbine can be calculated from the drive torque and the rotational speed. If the input power is known the efficiency of the wind turbine can be calculated from the output power.

The wind turbine may comprise a plurality of turbine blades distributed evenly about the rotor. Each blade may have respective first and second sensors. The step of generating a signal indicative of the torque about the axis of the rotor may include summing the bending moments about the axis of the rotor due to each turbine blade, whereby the effect of gravity is cancelled out.

The method may further comprise the step of generating a signal from the bending moment signals indicative of the resultant torque about an axis orthogonal to the axis of the rotor of the wind turbine.

The invention extends to computer software adapted to process output signals from strain sensors in accordance with the method described and to data processing apparatus adapted to process output signals from strain sensors in accordance with the method.

Brief Description of the Drawings

An embodiment of the invention will now be described by way of example only and with reference to the accompanying drawings, in which:

> Figure 1 is a schematic front view of a wind turbine operating in accordance with an embodiment of the invention;
> Figure 2 is a schematic side view of the wind turbine of Figure 1;
> Figure 3 is a partial schematic view of the arrangement of strain sensors in the wind turbine of Figure 1;
> Figures 4A and 4B are schematic diagrams illustrating the effect of the pitch angle of a turbine blade on the orientation of strain sensors;
> Figure 5 is a schematic graph illustrating the output signals from the strain sensors of Figure 3; and
> Figure 6 is a schematic diagram illustrating the variation in the resultant load on the turbine rotor.

Detailed Description of an Embodiment

By far the most influential input or cause of degradation in the drive train of a wind turbine is the loads on the drive shaft as a result of wind-induced forces on the blades. Monitoring of the blade loads and the loads transmitted into the drive shaft provides information about why degradation has occurred and further enables action to be taken to reduce wear.

Monitoring of blade loads has traditionally been conducted using resistive strain gauges and has been restricted to blade testing and qualification applications due to the poor reliability and fatigue performance of resistive gauges. The present applicant has introduced a long term reliable blade load monitoring system, based on Bragg fibre grating strain sensors, as described in WO 2004/056017. The blade monitoring system is installed within turbines for long term structural health monitoring and cyclic pitch control applications. Optical fibre sensors are installed in the root of each blade to measure flapwise and edgewise bending moment.

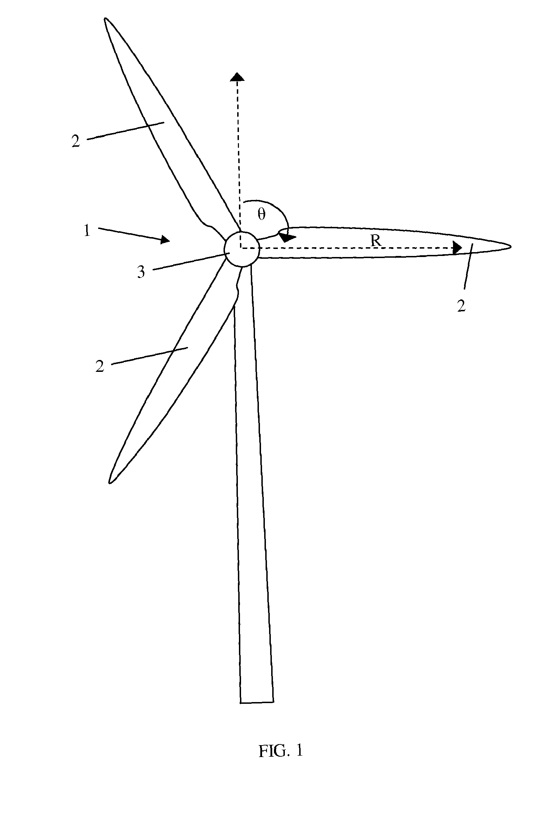

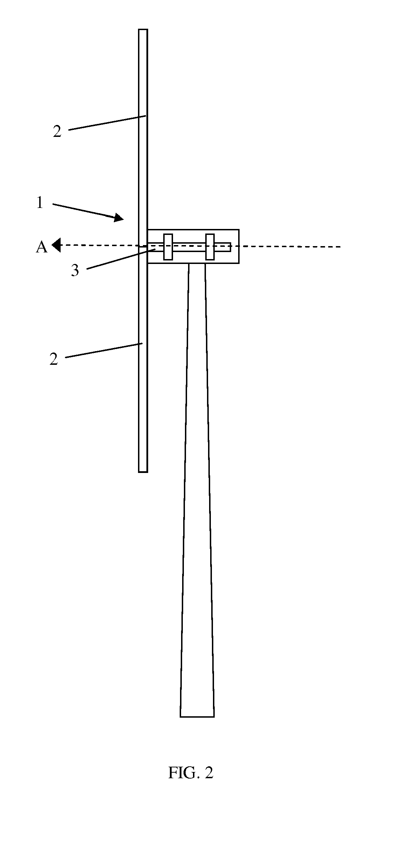

Figures 1 and 2 show schematic views of a wind turbine 1 operating in accordance with the invention. The turbine 1 comprises three nominally identical turbine blades 2 distributed equally about a rotor 3. The turbine blades 2 are mounted to the rotor 3 for rotation therewith. Each blade 2 is able to rotate about a respective radial axis R, in order to vary the pitch of the blade 2 with respect to the wind direction. The pitch of the blade can be varied during operation of the wind turbine to control the rotational speed of the blades 2 about the rotor axis A. In Figure 1, the azimuthal angle θ between the radial axis R of one blade and the upward vertical is shown. The rate of change ω of this azimuthal angle represents the angular speed of rotation of the wind turbine.

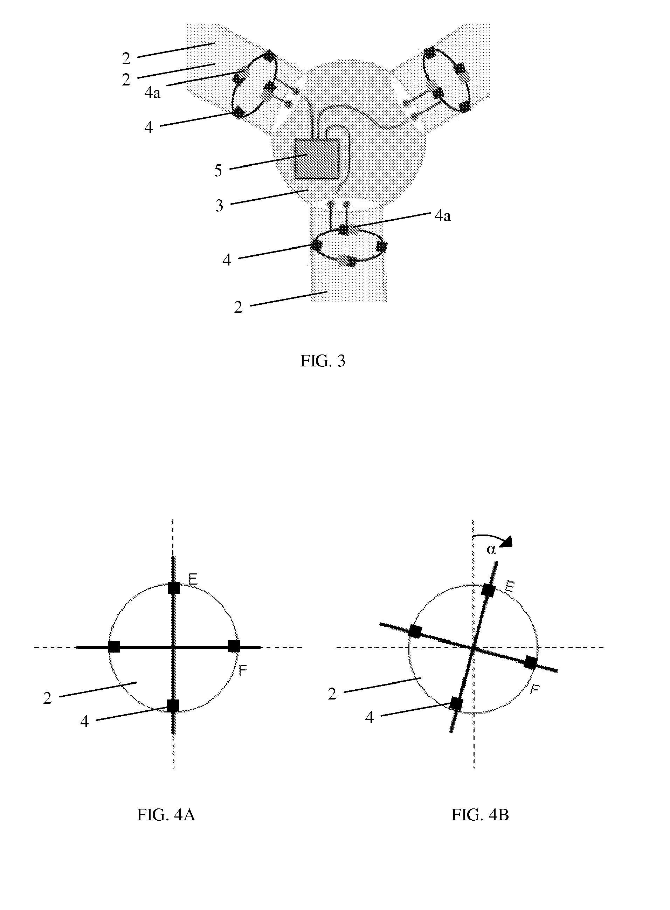

As shown schematically in Figure 3, each blade 2 is provided with four strain sensors 4 distributed about the radial axis R of the blade 2 close to the "root" of the blade 2, which is the point at which the blade connects to the rotor 3. The strain sensors 4 are typically located within the structure of the blade 2 close to the blade surface. Often, the strain sensors 4 are incorporated into the blade structure during manufacture. In addition to the strain sensors 4, temperature compensating sensors 4a are provided in each blade 2 in order to compensate the strain measurements for variations in temperature. The sensors 4, 4a connect to measurement instrumentation 5 located in the hub that converts the optical signals from the sensors 4 to digital electronic data. The read-out instrumentation 5 in some cases is located within the control cabinet and interfaces directly with the turbine control system. In other cases the instrument 5 can be connected to a third party condition monitoring system (not shown) or to a stand-alone data acquisition and storage unit. The instrumentation measures 15 sensors (three temperature compensation sensors) in the blades 30 times each second generating a large amount of data very rapidly. It is possible for the load data to be sampled at a lower rate by the condition monitoring system to reduce the amount of generated data, but this loses high frequency content of the signals and also peak dynamic loads. Instead, the instrumentation performs statistical analysis on the blade load data and only summary data is transferred to the condition monitoring system, or alternatively to a data logger for subsequent retrieval and analysis. The summary contains maximum, minimum, average and RMS values for the twelve strain sensors 4 in the three blade roots. Tracking these values against time, particularly when correlated with other measured parameters provides significant information about the input loads to the blades. However the load data can be further interpreted to infer further information about blade performance and also about loads input to the drive shaft.

Figures 4A and 4B show schematic cross-sectional views along the radial axis R of a turbine blade 2. As shown in Figure 4A, each blade 2 has four strain sensors 4 equally spaced around the blade root enabling simple, accurate calculation of both edgewise and flapwise blade root bending moments. The sensors 4 form two pairs, each pair being aligned along a respective axis, defined relative to the blade 2.

The edgewise axis E runs generally parallel to the longest transverse dimension, i.e. the width, of the turbine blade. Thus, the sensors 4 located on the edgewise axis E measure the strain in the edges of the turbine blade 2 that cut through the air as the rotor 3 rotates. From the difference in the strain measurements from the two sensors 4 located on the edgewise axis and the fixed mechanical properties of the turbine blade, the bending moment on the turbine blade 2 in the plane defined by the edgewise axis and the radial axis can be calculated.

The flapwise axis F is substantially orthogonal to the edgewise axis E, such that the sensors 4 located on the flapwise axis measure the strain on opposed surface of the turbine blade 2 over which air passes as the rotor 3 rotates. From the difference in the strain measurements from the two sensors 4 located on the flapwise axis F and the fixed mechanical properties of the turbine blade, the bending moment on the turbine blade 2 in the plane defined by the flapwise axis and the radial axis can be calculated.

The edgewise axis E and the flapwise axis F are substantially orthogonal to the radial axis R. As shown in Figure 4B, a variation in the pitch α of the turbine blade 2 rotates the edgewise and flapwise axes E, F about the radial axis R. Thus the pitch α of the turbine blade 2 can be considered as the angle between the edgewise axis E and a plane normal to the rotational axis A of the rotor 3.

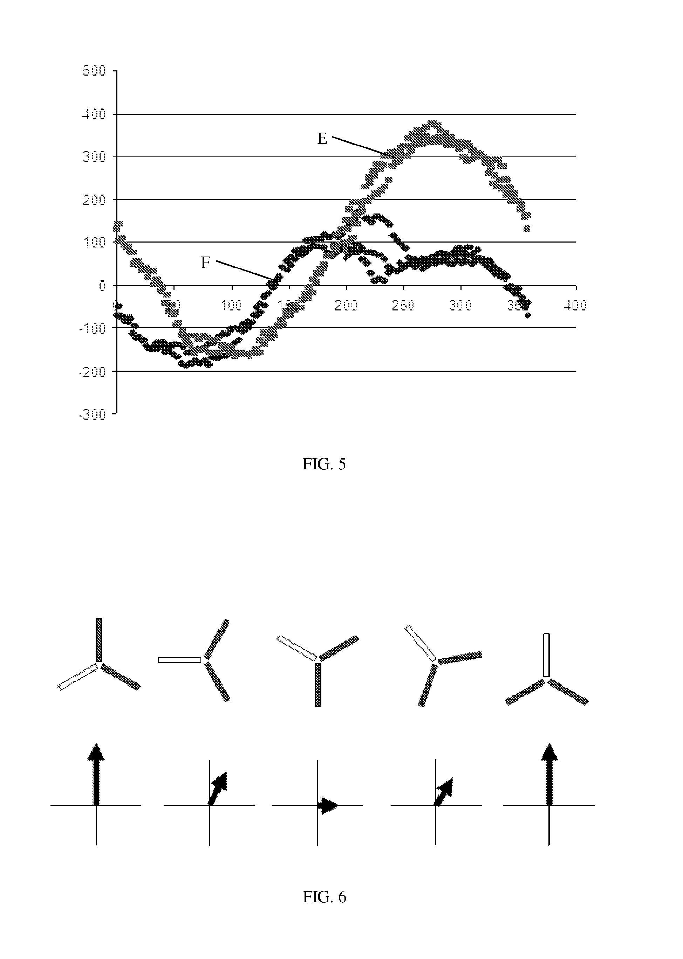

As the wind turbine rotates, the radial axis R of each blade 2 describes a circle about the axis A of the rotor 3. During this rotation, the bending moments measured by the edgewise and flapwise strain sensors 4 on each blade due to the effect of gravity vary sinusoidally as the relative orientation of the edgewise and flapwise axes vary with respect to the absolute vertical direction. This results in a sinusoidal component of the bending moment data of frequency $\omega$, i.e. the rotational speed of the wind turbine, as shown in Figure 5. Thus, the bending moment data can be used to determine the rotational speed of the wind turbine, by identifying the sinusoidal component of the bending moment data from the strain sensors 4.

Moreover, the pitch $\alpha$ of the turbine blade determines the proportion of the sinusoidal bending moment that appears in each of the edgewise and flapwise bending moment signals. If the pitch is zero (and the rotor axis A is substantially horizontal), all of the bending moment due to gravity will appear in the edgewise bending moment signal. Where the pitch $\alpha$ of the turbine blade 2 is non-zero, the ratio of the sinusoidal components from the flapwise and the edgewise bending moments (corrected for any angle between the axis A of the rotor and the horizontal) represents the tangent of the pitch angle $\alpha$. Thus, the pitch $\alpha$ of the turbine blade can also be calculated from the bending moment information. In order to calculate the pitch angle correctly, the ratio of the in-phase sinusoidal components of the flapwise and edgewise bending moments is calculated, as it is possible for each signal to include two sinusoidal components, for example a component due to differing winds speed at the highest and lowest points of the rotation cycle, as well as the components due to the effect of gravity.

Where the instantaneous rotational position $\theta$ and the pitch $\alpha$ of each blade 2 is known, the instantaneous bending moments in the edgewise and flapwise planes can be resolved into coordinate system relative to the orientation of the rotor 3. In this way, in addition to indicating blade health, the blade root bending moments can be combined to calculate input loads to the drive shaft including drive torque, load on tower and resultant offset load on the rotor shaft. Thus, for example, the sum of the bending moments from all of the turbine blades 2 resolved into the plane normal to the rotational axis A of the rotor 3 represents the drive torque on the rotor.

Using some basic assumptions regarding the expected distribution of the forces on the blade 2 that cause the bending moments, the force on each blade causing each bending moment can be calculated. The forces can be resolved in any desired direction using the instantaneous rotational position $\theta$ and the pitch $\alpha$ of each blade 2. Figure 6 illustrates how the forces on the rotor can be resolved into a resultant offset load on the rotor shaft. The total force in the axial direction of the rotor can also be calculated, for example.

For the calculation of loads and moments on the rotor from the blade bending moment data, the instantaneous rotational position $\theta$ and the pitch $\alpha$ of each blade 2 may be determined otherwise than from the blade bending moment data, as described above. For example, the instantaneous rotational position $\theta$ and the pitch $\alpha$ of each blade 2 may be received from the control system of the wind turbine.

By resolving the edgewise and flapwise loads in the plane of the rotor, the input torque to the drive shaft can be calculated as a function of time showing the magnitude and variability of the drive torque. Frequency domain analysis of the drive torque for a particular turbine highlighted a strong harmonic at the rotor rotation frequency. If the rotor were perfectly balanced, then all blades would be generating equally when at the same point in space, except for variations in wind conditions. Variations in wind conditions are both systematic (for example wind shear, tower shadowing) and non-systematic (for example gusts) and for a balanced rotor neither of these should generate a drive torque that varies at the same frequency as the rotor rotates. The large harmonic is therefore an indication of rotor imbalance. Examination of the phase of the frequency domain information revealed the particular blade that was out of balance.

By resolving blade root bending moments in the horizontal and vertical direction the offset loads on the drive shaft can be determined. The bearings in the drive shaft are designed to accommodate axial loads, but continual dynamic offset loads can lead to wear. The resultant magnitude and direction of the resultant load for the turbine monitored is shown in Figure 6 for a 120° rotation of the turbine.

The load vector is almost vertical as one blade travels through the top of its sweep and then drops rapidly in magnitude. For the turbine monitored the magnitude of the offset load was examined in the frequency domain. The response is almost entirely at three times the rotor frequency, as would be expected due to systematic wind variations.

The bending moment due to the effect of gravity on the turbine blade can be considered to be due to the weight of the blade acting at the centre of gravity of the blade. Thus, the magnitude of the bending moment is proportional to the weight of the blade and to the distance of the centre of gravity of the blade from the blade root. The magnitude of the bending moment is inversely proportional to the stiffness of the blade. Both the mass and the position of the centre of gravity of wind turbine blades are measured when the blade is manufactured, so that three similar blades can be used in a single turbine to minimise eccentricity of the turbine. Given the manufacturer's values for mass and centre of gravity, the stiffness of the blade can be calculated from the measured bending moments in the flapwise direction and the edgewise direction. The effective weight of the blade in the flapwise or edgewise direction is a function of the pitch angle of the blade (corrected for the angle of the rotational axis of the turbine to the horizontal). Thus, the flapwise (or edgewise) bending moment is proportional to the component of the weight of the blade acting parallel to the flapwise (edgewise) axis.

To calibrate each FBG strain sensor 4 on each turbine blade, the wavelength reflected by the Bragg grating of the strain sensor in the absence of a load on the turbine blade is required. However, in real applications, there is never zero load on the turbine blade, as the blade has at least a weight. As explained above, as the wind turbine rotates, the radial axis R of each blade 2 describes a circle about the axis A of the rotor 3. During this rotation, the bending moments measured by the edgewise and flapwise strain sensors 4 on each blade due to the effect of gravity vary sinusoidally as the relative orientation of the edgewise and flapwise axes vary with respect to the absolute vertical direction. This results in a sinusoidal component of the bending moment data of frequency ω, i.e. the rotational speed of the wind turbine, as shown in Figure 5. This sinusoidal signal can be extracted from the bending moment data using a bandpass filter locked to the rotational frequency of the turbine. The peak-to-peak amplitude of these sinusoidal signals can be measured. The point half way between the peaks and troughs of the sinusoidal signal represents the zero-crossing of the sinusoidal signal, which is the output wavelength of the unstrained strain sensors. The value of the peak-to-peak amplitude of the sinusoidal signal indicates the constant of proportionality between the output signals from the strain sensors and the bending moment due to the weight of the blade. This constant of proportionality is related to the stiffness of the blade and can be used to calibrate subsequent measurements. Thus, the strain sensors can be calibrated by measuring the sinusoidal signal due to the effect of gravity on the turbine blades. The sinusoidal signals can be maximised by adjusting the pitch angle of the blades so that maximum component of the blade weight acts on the flapwise or edgewise strain sensors, as required.

It is desirably to rotate the turbine slowly, and preferably at a constant speed, during calibration to minimise aerodynamic and centrifugal forces. This is best achieved by having the blades significantly feathered to minimise bending due to the wind and with no electrical load on the generator. It is also desirable to average the measurements over several revolutions of the turbine. Compared to a typical rotational speed of the wind turbine of 15 to 20 rpm, a slow rotation is around 5 rpm. Thus, the rotational speed during calibration may be less than 10 rpm, particularly less than 7 rpm. The rotational speed during calibration may be less than a third, particularly less than a quarter, of the typical operating speed.

With the strain sensors calibrated and the flapwise and edgewise stiffness of each rotor blade determined in the manner described above, changes in the mass of the rotor blade can be identified as changes in the bending moments on the turbine blades due to the weight of the blade. Any increase in the bending moment of the blade can be used as an indicator of ice forming on the blade. The formation of ice on a turbine blade represents a significant safety hazard, because the ice can be thrown off the rotating turbine blades. Furthermore, the uneven weight distribution across the three rotor blades due to the ice increases wear on the rotor. With the system described herein, the formation of ice on the rotor blades can be identified as changes in the bending moment of the blade, and appropriate action can be taken.

The detection of ice depends on measurements of strain. The strain ε at a distance y from the neutral axis of a turbine blade is derived from the applied bending moment M, Young's modulus E and second moment of area I using

$$\varepsilon = \frac{My}{EI}$$

Additional ice increases the bending moment (force x distance) due to the added mass. However, it is known that with time turbine blades soften, causing the Young's modulus E to reduce. This will increase the measured strains and could therefore falsely appear as an increase in mass due to ice. The softening takes place gradually over a period of years. To account for this, baseline measurements for an uniced bladed can be reset periodically at times where the blade is known not to have any ice present. In other words, periodic calibration may take place to compensate for any changes in the Young's modulus of the turbine blade due to softening.

The detection of ice according to this method requires the turbine to be rotating. However, once a turbine has been shut down, for example due to ice or low winds, it is not possible to tell whether ice is present according to this method without first starting rotation of the turbine. The problem with icing blades is the hazard associated with throwing ice and the excessive loads that the added mass can exert on the turbine. By slowly rotating the turbine at start-up, ice can be detected according to this method without significant risk of throwing ice very far or exerting excessive loads. Slow rotation is around 5 rpm compared to a typical running speed of 15 to 20 rpm. Thus, the rotational speed during ice detection may be less than 10 rpm, particularly less than 7 rpm. The rotational speed during ice detection may be less than a third, particularly less than a quarter, of the typical operating speed.

All of the above derived parameters representing both blade performance and rotor loads are initially calculated 30 times per second and stored in short term memory within the instrumentation 5. Further data compression and statistical analysis of both time domain and frequency domain data is performed to generate a limited number of summary parameters for onward transmission to a condition monitoring system or a separate data logger unit.

The strain sensor instrument 5 is located in the turbine hub and converts optical signals received from the blade load sensors 4 to digital data. The instrument 5 generates about 500 measurements every second which is too much to be directly input to a typical condition monitoring unit, in addition to data arriving from all the other sensors recorded. The strain sensor instrument 5 therefore processes the raw data as described above to calculate key parameters for both the blades 2 and the rotor 3. Parameters include blade bending moment, blade fatigue, drive torque and offset load vector and are calculated 30 times every second. Time domain data of the derived parameters is still too much information to be transmitted to the condition monitoring unit so the data is summarised using key time domain and frequency domain statistics as described above. Blocks of data 1 minute in length are summarised into a total of 32 numbers that are transmitted to the monitoring unit. The strain sensor instrumentation has therefore summarised a total of 30,000 strain measurements acquired during a minute into 32 numbers for onward transmission to the monitoring unit.

The monitoring unit typically transmits data on to the control room a few times each day. Transmission bandwidth from the monitoring unit to the control room is also limited, so further processing of the data is performed in the monitoring unit. Further data reduction is performed specific to each parameter.

For accumulated fatigue measurements sent from the strain-sensing instrumentation 5, the most recent value is sent to the control room. For blade bending moments, the strain-sensing instrumentation transmits maximum, minimum, average and RMS summary values for each minute. The monitoring unit uses these values to generate blade load histograms and it is these histograms that are uploaded to the control room to summarise the loading on the blades since the last data upload.

In addition to processing and summarising data from the strain-sensing instrumentation 5, the monitoring unit also summarises and transmits data from all the other sensors. The control room server therefore receives summary data from both input and output instrumentation. With all the data stored via a single system it becomes simple to view cause and effect on a single screen.

Linking the input blade loads to other monitoring systems within a turbine provides a number of different benefits. Firstly the monitoring unit can raise alarms based on measurement data from the strain-sensing instrumentation, alerting the operator that key threshold levels stored within the monitoring unit have been exceeded. Secondly any unscheduled maintenance or intervention may be planned through condition monitoring of the blade and rotor along with the output drive train parameters. Thirdly the data provides the opportunity to monitor and improve our understanding of how dynamic blade loads lead to degradation of both blades and drive train components and to monitor the effectiveness of load reduction methods such as cyclic pitch control to ultimately reduce levels of wear.

Modern turbines contain extensive instrumentation monitoring a wide variety of parameters. Drive train monitoring during turbine operation has been limited to monitoring the output or result of blade loads on the drive shaft. Frequency analysis of accelerometer responses provides information about degradation of different parts of the drive train.

Blade load sensors monitor the blade bending moments that are the individual input loads to the drive shaft. The system has been interfaced with a typical condition monitoring system to link the input loads to the output responses. The system can be installed in new turbines alongside an existing condition monitoring system, or can just as easily be retrofitted to an existing turbine that contains a condition monitoring system. Alternatively, the system can operate as a stand-alone data logger.

The strain-sensing instrumentation processes the blade root bending moments to calculate information about both the blades and the rotor. Key parameters calculated include blade fatigue, rotor drive torque and offset load on the drive shaft. Frequency analysis of the drive torque and offset loads can infer how much the rotor is out of balance and can further identify which blade is incorrectly configured.

Linking the drive train inputs and outputs via a single system enables the condition of both the blades and the drive train to be monitored via a single system. It also enables drive shaft degradation to be correlated with the blade load conditions that cause the degradation which will lead to improved design of turbines and load reduction methods such as cyclic pitch control.

In summary, embodiments of the invention include installing load sensors in turbine blades for real time measurement of blade bending moments. Blade load information is used for both cyclic pitch control and condition monitoring applications. The blade loads are the inputs that lead to drive train degradation, which are linked to the output signals measuring degradation on the turbines drive train by combining the blade load data with drive train data via a single condition monitoring system.

The instrumentation calculates key parameters for the blades such as load history spectra and fatigue. It also combines measurements from each blade to calculate key rotor parameters including drive torque and offset load on the drive shaft. Statistical analysis of both time-domain and frequency-domain responses are used to summarise data prior to onward submission to the condition monitoring system.

With the input and output parameters all recorded via a single system, the cause of drive train degradation can be identified, enabling improved design of turbine components and dynamic load reduction methods. Furthermore, with both blade health and drive train health monitored via a single system, unscheduled maintenance and intervention may be better identified and planned.

This application discloses a method of monitoring the performance of a wind turbine 1 uses bending moment data from strain sensors 4 in the turbine blades 2 to calculate rotational speed of the turbine 1, angular position of the turbine blades 2, drive torque and resultant load on the rotor 3. The method has the advantage that the inputs to the drive train of the wind turbine can be measure directly.

In summary, this application discloses a method of detecting the formation of ice on the blades of a wind turbine 1. The wind turbine has at least one turbine blade 2 mounted to a rotor and provided with at least a first strain sensor 4 for measuring mechanical strain of the turbine blade. The method comprises detecting changes in an output signal of the strain sensor 4 due to changes in the mass of the turbine blade 2 caused by the formation of ice on the turbine blade.

**Claims**

1. A method of detecting the formation of ice on the blades of a wind turbine, the wind turbine having at least one turbine blade mounted to a rotor and provided with at least a first strain sensor for measuring mechanical strain of the turbine blade, the method comprising:

   detecting changes in an output signal of the strain sensor(s) due to changes in the mass of the turbine blade caused by the formation of ice on the turbine blade.

2. A method as claimed in claim 1, wherein the strain sensor is mounted to the turbine blade proximate the rotor.

3. A method as claimed in claim 1 or 2, comprising processing the output signal of the first strain sensor to identify a periodic component of the output signal indicative of mechanical strain due to the effect of gravity on the turbine blade.

4. A method of calibrating an optical fibre strain sensor in a wind turbine, the wind turbine having at least one turbine blade mounted to a rotor and provided with at least a first strain sensor for measuring mechanical strain of the turbine blade, the method comprising:

   rotating the wind turbine;
   processing an output signal of the first strain sensor to identify a periodic component of the output signal indicative of mechanical strain due to the effect of gravity on the turbine blade;
   determining an output value for the unstrained first strain sensor by reference to the midpoint of the peak-to-peak amplitude of the output signal.

5. A method of calibrating an optical fibre strain sensor in a wind turbine, the wind turbine having at least one turbine blade mounted to a rotor and provided with at least a first strain sensor for measuring mechanical strain of the turbine blade, the method comprising:

   rotating the wind turbine;
   processing an output signal of the first strain sensor to identify a periodic component of the output signal indicative of mechanical strain due to the effect of gravity on the turbine blade;
   determining a relationship between the output value of the first strain sensor and the bending moment due to the mass of the turbine blade by reference to the peak-to-peak amplitude of the output signal.

6. A method of calibrating an optical fibre strain sensor in a wind turbine, the wind turbine having at least one turbine blade mounted to a rotor and provided with at least a first strain sensor for measuring mechanical strain of the turbine blade, the method comprising:

   rotating the wind turbine at less than 10 rpm;
   processing an output signal of the first strain sensor to identify a periodic component of the output signal indicative of mechanical strain due to the effect of gravity on the turbine blade;
   determining a calibration value by reference to the periodic component of the output signal.

7. Computer software adapted to process output signals from strain sensors in accordance with the method of any preceding claim.

8. Data processing apparatus adapted to process output signals from strain sensors in accordance with the method of any preceding claim.

FIG. 1

FIG. 2

FIG. 3

FIG. 4A

FIG. 4B

FIG. 5

FIG. 6

**REFERENCES CITED IN THE DESCRIPTION**

**Patent documents cited in the description**

• US 4297076 A

• WO 2004056017 A